(19) **Europäisches Patentamt**

**European Patent Office**

**Office européen des brevets**

(11) **EP 1 412 774 B1**

(12) **EUROPÄISCHE PATENTSCHRIFT**

(45) Veröffentlichungstag und Bekanntmachung des Hinweises auf die Patenterteilung:
**29.12.2004   Patentblatt 2004/53**

(21) Anmeldenummer: **02732415.1**

(22) Anmeldetag: **04.05.2002**

(51) Int Cl.⁷: **G01S 13/93**

(86) Internationale Anmeldenummer:
**PCT/DE2002/001620**

(87) Internationale Veröffentlichungsnummer:
**WO 2003/008996 (30.01.2003 Gazette 2003/05)**

(54) **VERFAHREN ZUR ZEITLICHEN SYNCHRONISATION MEHRERER FAHRZEUGSENSOREN**

METHOD FOR THE TEMPORAL SYNCHRONISATION OF A PLURALITY OF VEHICLE SENSORS

PROCEDE ET DISPOSITIF DE SYNCHRONISATION DANS LE TEMPS DE PLUSIEURS CAPTEURS DE VEHICULE

(84) Benannte Vertragsstaaten:
**DE FR GB IT SE**

(30) Priorität: **17.07.2001  DE 10133962**

(43) Veröffentlichungstag der Anmeldung:
**28.04.2004   Patentblatt 2004/18**

(73) Patentinhaber: **ROBERT BOSCH GMBH**
**70442 Stuttgart (DE)**

(72) Erfinder:
• **KLOTZ, Albrecht**
**72076 Tuebingen (DE)**
• **UHLER, Werner**
**76646 Bruchsal (DE)**
• **STAEMPFLE, Martin**
**89075 Ulm (DE)**

(56) Entgegenhaltungen:
**EP-A- 0 924 899       EP-A- 1 193 913**
**DE-A- 4 140 017       DE-A- 4 210 189**
**DE-A- 19 957 551      US-A- 6 111 888**

EP 1 412 774 B1

## Beschreibung

Stand der Technik

Gegenwärtige Fahrzeugführungsfunktionen, wie z.B. ACC (Adaptive Cruise Control) basieren auf der Aufbereitung und Verarbeitung der Informationen nur eines Umfeldsensors, beispielsweise eines 77GHz-FMCW-Radars. Regel- und Funktionsalgorithmen arbeiten in der Regel im gleichen Zeittakt wie der Sensor selbst und sind damit im wesentlichen automatisch synchron und müssen nicht mit den Sensordaten synchronisiert werden. Ein verfahren zum nachträglichen Synchronisieren von Sensordaten ist aus DE-A-199 57 551 bekannt.

Vorteile der Erfindung

Das erfindungsgemäße Verfahren und die erfindungsgemäße Vorrichtung zur Synchronisation von Sensordaten hat den Vorteil, daß die Daten von unabhängig voneinander arbeitenden Umfeldsensoren auf eine gemeinsame Zeitbasis synchronisiert werden können. Hierdurch ist es möglich, ein höchstmögliches Maß zeitlicher Integrität der Daten für die im Anschluß an die Messung stattfindende Datenauswertung, insbesondere in einer Datenauswerteinheit, zu erzielen.

Durch die in den Unteransprüchen aufgeführten Maßnahmen sind vorteilhafte Weiterbildungen und Verbesserungen des in den nebengeordneten Ansprüchen angegebenen Verfahrens und der Vorrichtung möglich.

Zeichnung

Ein Ausführungsbeispiel der Erfindung ist in der Zeichnung dargestellt und in der nachfolgenden Beschreibung näher erläutert. Es zeigen:

Figur 1 ein System zur Erfassung und Auswertung von Sensordaten und
Figur 2 ein Beispiel für eine retrodiktive Synchronisation.

Beschreibung des Ausführungsbeispiels

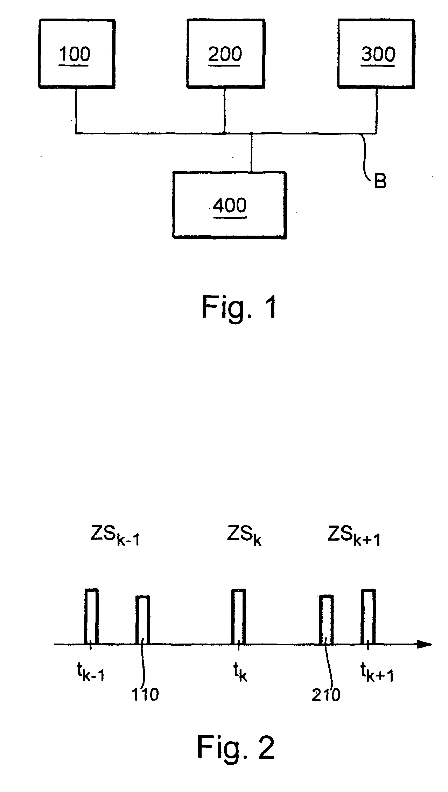

In Figur 1 ist ein System zur Erzeugung und Verarbeitung von Sensordaten dargestellt. Ein solches erfindungsgemäßes System umfaßt in der Regel eine Mehrzahl von Sensoren, wobei in der Figur 1 ein erster Sensor 100, ein zweiter Sensor 200 und ein dritter Sensor 300 für die Mehrzahl von Sensoren stehen. Selbstverständlich ist es auch möglich, das erfindungsgemäße Verfahren lediglich mit einem einzigen Sensor, beispielsweise der erste Sensor 100 durchzuführen, jedoch sind in der Regel wenigstens zwei Sensoren vorhanden.

Das in Figur 1 dargestellte System umfaßt außerdem Sensoren 100, 200, 300 noch ein Bussystem B und eine Auswerteeinheit 400, die auch als Informationsplattform 400 bezeichnet wird. Über das Bussystem B ist jeder der Sensoren 100, 200, 300 mit der Informationsplattform 400 verbunden. Als Bussystem eignet sich erfindungsgemäß insbesondere ein Bussystem gemäß der CAN-Architektur (controller area network). Es ist erfindungsgemäß jedoch auch möglich, ein anderes Bussystem zur Herstellung einer Verbindung zwischen jedem der Sensoren 100, 200, 300 und der Informationsplattform 400 vorzusehen.

Die Informationsplattform 400 umfaßt in der Regel einen Mikroprozessor, welcher - entweder in Hardware oder in Software ausgebildet - eine Sensordatenfusionseinheit umfaßt. Im folgenden wird die Sensordatenfusionseinheit, die im folgenden auch als "SDF" für "Sensordatenfusion" abgekürzt wird, in Form einer softwaremäßigen Implementierung beschrieben.

Kern der Erfindung ist ein Verfahren, bei dem die Daten von den Sensoren 100, 200, 300, die im folgenden auch Umfeldsensoren 100, 200, 300 genannt werden, auf eine einheitliche Zeitbasis berechnet werden. Als Daten der Umfeldsensoren 100, 200, 300, die im folgenden auch als Sensordaten bezeichnet werden, kommen insbesondere Positions- und Geschwindigkeitsdaten von Objekten in Frage. Eine Anwendung der Erfindung wird insbesondere darin gesehen, die Sensoren 100, 200, 300 in bzw. an einem Kraftfahrzeug zu positionieren und mit diesem das Umfeld des Kraftfahrzeugs zu sensieren. Hierdurch ergibt sich auch die Bezeichnung Umfeldsensoren für die Sensoren 100, 200, 300. Als Objekt wird im vorliegenden Zusammenhang insbesondere ein materielles Objekt im Umfeld eines mittels der Sensoren 100, 200, 300 ausgestatteten Kraftfahrzeugs aufgefaßt.

Im allgemeinen arbeiten die Umfeldsensoren 100, 200, 300 unabhängig voneinander, asynchron und unter Umständen mit variablen Zykluszeiten. Zur Synchronisation auf eine gemeinsame Zeitbasis wird die Taktzeit der Sensordatenfusionseinheit bzw. der Informationsplattform 400 zugrundegelegt. Diese gemeinsame Zeitbasis besteht aus einer Folge von Basiszeitpunkten, die im folgenden mit $t_{k-1}$, $t_k$, $t_{k+1}$ bezeichnet werden. Die Taktzeit dieser gemeinsamen Zeitbasis kann entweder variabel oder konstant sein. Vorzugsweise ist die Taktzeit der Zeitbasis mindestens so groß wie die schnellste Einzelsensortaktzeit, d.h. die Zykluszeit des mit der höchsten Taktrate getakteten Einzelsensors.

Es wird angestrebt, die Objekte im Umfeld eines Kraftfahrzeugs möglichst vollständig, beispielsweise in Form von Datenobjekten, in der Sensordatenfusionseinheit bzw. der Sensordatenfusions-Software oder auch kurz in der SDF zu repräsentieren. Hierzu muß bekannt sein, an welcher Stelle sich ein vorgegebenes Objekt zu einem vorgegebenen Zeitpunkt befindet. Zur Erleichterung der datenmäßigen Abbildung der Objekte des Kraftfahrzeugumfelds in die Datenobjekte der Sensordatenfusion ist es vorteilhaft, sich lediglich auf die Basiszeitpunkte der gemeinsamen Zeitbasis der Sensordatenfusion zu beziehen. Da die Sensoren 100, 200, 300 von der gemeinsamen Zeitbasis unabhängig, d.h. asynchron, arbeiten, stimmt im allgemeinen der Meßzeitpunkt, an welchem das Fahrzeugumfeld von einem der Sensoren 100, 200, 300 sensiert wird, nicht mit den Basiszeitpunkten überein.

Es ist erfindungsgemäß vorgesehen, den Wert wenigstens einer Größe, die charakteristisch für eines der Objekte im Fahrzeugumfeld ist, vom Meßzeitpunkt auf wenigstens einen der Basiszeitpunkte umzurechnen. Hierdurch wird eine gemeinsame Zeitbasis, bestehend aus den Basiszeitpunkten, für die Repräsentation der Objekte im Fahrzeugumfeld in den Datenobjekten der Sensordatenfusion hergestellt.

Für die Durchführung der erfindungsgemäßen Synchronisation ist es zunächst notwendig, den Meßzeitpunkt eines Sensors 100, 200, 300 zu bestimmen. Dies geschieht in der Sensordatenfusionseinheit. Es wird angenommen, daß beispielsweise der erste Sensor 100 ein Datenobjekt ausgehend von einem Meßvorgang erstellt hat und über den Bus B zur Informationsplattform 400 übertragen hat. Die Sensordatenfusionseinheit auf der Informationsplattform 400 ermittelt in diesem Fall den Eingang des Datenobjekts von dem ersten Sensor 100. Hierzu versieht sie das über den Bus B übertragene Datenobjekt mit einem sogenannten Eingangszeitstempel. Dieses vom ersten Sensor 100 übertragene Datenobjekt war zwischen dem ersten Sensor 100 und der Informationsplattform 400 während einer durchschnittlichen Übertragungszeit unterwegs. Daher sollte, um den Meßzeitpunkt genauer zu ermitteln, von dem Eingangszeitstempel an der Informationsplattform 400 wenigstens die durchschnittliche Übertragungszeit zwischen dem ersten Sensor 100 und der Informationsplattform 400 zeitlich von dem Eingangszeitstempel abgezogen werden. Um dem Meßzeitpunkt darüberhinaus noch genauer festzulegen, ist es möglich, im vom ersten Sensor 100 übermittelten Datenobjekt eine sogenannte Sensortotzeit zu übermitteln, die der physikalischen Herstellzeit im Sensor des zur Informationsplattform 400 übermittelten Datenobjektes entspricht. Die Sensortotzeit entspricht der Zeitspanne zwischen dem tatsächlichen Meßvorgang und dem Anliegen des Datenobjekts an dem Bus B zur Übertragung an die . Informationsplattform 400. Zu einer genaueren Übermittlung des Meßzeitpunktes muß daher die Sensortotzeit zusammen mit der durchschnittlichen Übertragungszeit von dem Eingangszeitstempel an der Informationsplattform 400 abgezogen werden.

In Figur 2 ist ein Beispiel für die erfindungsgemäße Synchronisation von Sensordaten auf eine gemeinsame Zeitbasis dargestellt. In Figur 2 ist ein mit dem Bezugszeichen t versehener Zeitstrahl dargestellt. Auf dem Zeitstrahl sind ein erster Basiszeitpunkt $t_{k-1}$, ein zweiter Basiszeitpunkt $t_k$ und ein dritter Basiszeitpunkt $t_{k+1}$ dargestellt. Im Beispiel sind die Basiszeitpunkte $t_{k-1}$, $t_k$, $t_{k+1}$ zeitlich äquidistant dargestellt. Erfindungsgemäß ist es jedoch auch möglich, die Taktzeit der Zeitbasis variabel zu gestalten. Zusätzlich sind in Figur 2 die zu den Basiszeitpunkten gehörenden Zeitstempel dargestellt, wobei dem ersten Basiszeitpunkt $t_{k-1}$, der erste Zeitstempel $ZS_{k-1}$, dem zweiten Basiszeitpunkt $t_k$ der zweite Zeitstempel ZSk und dem dritten Basiszeitpunkt $t_{k+1}$ der dritte Zeitstempel $ZS_{k+1}$ entspricht. Weiterhin ist in der Figur 2 ein erster Meßzeitpunkt 110 zwischen dem ersten Basiszeitpunkt $t_{k-1}$ und dem zweiten Basiszeitpunkt $t_k$ auf dem Zeitstrahl eingetragen. Der erste Meßzeitpunkt 110 entspricht dem um die Übertragungszeit und möglicherweise zusätzlich die Sensortotzeit korrigierten Eingangszeitstempel des Datenobjekts an der Informationsplattform 400. Der erste Meßzeitpunkt entspricht beispielsweise einer Messung am ersten Sensor 100.

Von dem zu repräsentierenden Objekt im Umfeld des Fahrzeugs sind also eine oder mehrere Größen zum ersten Meßzeitpunkt 110 bekannt, die auf einen der Basiszeitpunkte $t_{k-1}$, $t_k$, $t_{k+1}$ erfindungsgemäß umgerechnet werden. Als so umzurechnende Größe sind erfindungsgemäß insbesondere die Position und die Geschwindigkeit des Objekts relativ zum Fahrzeug interessant, d.h. die x-Koordinate und die y-Koordinate der Position und der Geschwindigkeit. Daher ist es erfindungsgemäß vorgesehen, wenigstens die Position und die Geschwindigkeit eines Objektes, welches zum ersten Meßzeitpunkt 110 eine gemessene und/oder berechnete Position und Geschwindigkeit aufweist, an einem der Basiszeitpunkte $t_{k-1}$, $t_k$, $t_{k+1}$ zu bestimmen. Erfindungsgemäß ist insbesondere vorgesehen, bei dem ersten Meßzeitpunkt 110 die Umrechnung der interessierenden Größen auf den ersten Basiszeitpunkt $t_{k-1}$ oder den zweiten Basiszeitpunkt $t_k$ durchzuführen und bei einem zweiten Meßzeitpunkt 210 die interessierenden Größen auf den zweiten Basiszeitpunkt $t_k$ oder den dritten Basiszeitpunkt $t_{k+1}$ umzurechnen.

Bei einer sogenannten retrodiktiven Synchronisation findet eine Retrodiktion ausgehend von erstem Messzeitpunkt 110 auf den ersten Basiszeitpunkt $t_{k-1}$ statt, d.h. die interessierenden Größen zum ersten Meßzeitpunkt 110 werden auf den ersten Basiszeitpunkt $t_{k-1}$ umgerechnet. Entsprechend werden bei der retrodiktiven Synchronisation die interessiernden Größen des zweiten Meßzeitpunktes 210 auf den zweiten Basiszeitpunkt $t_k$ umgerechnet. Diese Synchronisation bietet sich vor allem bei Sensoren an, bei denen nur der Abstand, d.h. die Position des zu messenden und im Umfeld des Fahrzeugs befindlichen Objekts eine direkt gemessene Größe ist, wie beispielsweise bei Videosensoren, bei der 24 GHz-Puls-Sensorik oder bei einem Lidar-Sensor. Bei diesen Sensor-Systemen wird die von den Sensoren 100, 200, 300 als Sensordaten an die Informationsplattform 400 übertragenen Geschwindigkeiten und Beschleunigungen aus der zeitlichen Abstandsänderung vorhergehender Messungen bestimmt. Der Datensatz der Sensordaten ist daher nicht vollständig konsistent, da sich die Daten auf verschiedene Zeitpunkte bzw. Zeiträume beziehen. Durch die retrodiktive Synchronisation wird die zeitliche Zugehörigkeit und Integrität dieser Sensordaten erhöht, weil ausgehend von den Meßzeitpunkten 110, 210 eine Umrechnung auf einen früheren Basiszeitpunkt erfolgt, der zeitlich den Zeiten näher liegt, über welche die Geschwindigkeit bzw. die Beschleunigung berechnet wurde. Ausgehend von einem in der Informationsplattform 400 bzw. der Sensordatenfusionseinheit vorliegenden konsistenten Datensatz zum ersten Basiszeitpunkt $t_{k-1}$ (für den ersten Meßzeitpunkt 110) bzw. zu dem zweiten Basiszeitpunkt $t_k$ (für den zweiten Meßzeitpunkt 210) ist es erfindungsgemäß vorgesehen, für eine weitere Auswertung der Sensordaten in der Sensordatenfusionseinheit eine Prädiktion der Daten auf den zeitlich nachfolgenden Basiszeitpunkt durchzuführen.

Bei der prädiktiven Synchronisation findet eine Prädiktion der interessierenden Größen des Objekts ausgehend von dem ersten Meßzeitpunkt 110 auf den zweiten Basiszeitpunkt $t_k$ bzw. ausgehend von dem zweiten Meßzeitpunkt 210 auf den dritten Basiszeitpunkt $t_{k+1}$ statt. Diese Synchronisation bietet sich vor allem bei Sensoren an, bei denen der Abstand, bzw. die Position des Objekts im Fahrzeugumfeld, und die Geschwindigkeit des Objeks direkt gemessene Größen sind, beispielsweise beim FMCW-Radar. In diesem Fall ist nur die Relativbeschleunigung eine abgeleitete Meßgröße. Der Datensatz, der von den Sensoren 100, 200, 300 über das Bussystem B an die Informationsplattform 400 geliefert werden sind bezüglich der Position und der Geschwindigkeit des im Fahrzeugumfeld befindlichen Objekts zeitlich konsistent.

Zur Berechnung der Position eines Objekts zu einem beliebigen Zeitpunkt ausgehend von den Positionen des Objekts zu anderen Zeitpunkten werden insbesondere die bekannten Gleichungen

$$x(t+\Delta t) = x(t) + v*\Delta t + 0{,}5*a*\Delta t^2$$

und

$$v(t+\Delta t) = v(t) + a*\Delta t$$

angewandt, wobei v und a der Geschwindigkeit beziehungsweise der Beschleunigung entsprechen. Als Alternativen dazu sind auch erweiterte Schätzmodelle unter Einbeziehung der Trackingdaten und der aktuellen Meßdaten, wie zum Beispiel:

$$x(t+\Delta t) = P(\Delta t)*x(t)$$

möglich. Für die retrodiktive Synchronisation muß selbstverständlich das Zeitintervall $\Delta t$ mit einem negativen Wert versehen werden, weil der zu berechnende Zeitpunkt (Basiszeitpunkt) in diesem Fall vor dem Meßzeitpunkt liegt.

Zur Synchronisation von Größen des Objekts von einem der Meßzeitpunkte 110, 210 auf einen der Basiszeitpunkte $t_{k-1}$, $t_k$, $t_{k+1}$ ist erfindungsgemäß insbesondere vorgesehen, modellgestützte Prädiktoren, wie z.B. Kalman-Filter zu verwenden.

Zur Bestimmung der Meßzeitpunkte 110, 210 ist es erfindungsgemäß auch vorgesehen, daß die Informationsplattform 400 Zeitstempel-Daten an die Sensoren 100, 200, 300 sendet und daß die von den Sensoren 100, 20D, 300 zu der Informationsplattform 400 gesendeten Sensordaten sich auf die Zeitstempeldaten beziehen und zur Angabe des Meßzeitpunktes lediglich den zeitlichen Unterschiedsbetrag (offset) zu einem bestimmten Zeitstempel-Zeitpunkt der Zeitstempel-Daten überträgt. Hierdurch wird die Zuordnung von Sensordaten zu bestimmten Meßzyklen vereinfacht, insbesondere dann, wenn die Zykluszeiten der Sensoren 100, 200, 300 und der Informationsplattform 400 stark voneinander abweichen und wenn Sensoren 100, 200, 300 direkt und gezielt von der Informationsplattform 400 angesprochen werden und darauf reagieren, beispielsweise bei der Aufmerksamkeitssteuerung und der Präkonditionierung.

Es wird vorausgesetzt, daß die Sensoren ein sensorinternes tracking, d.h. ein "Wiederfinden&Verfolgen" durchführen und zu jedem Objekt neben den (kinematischen) Objektdaten auch noch die Attribute "gemessen" und "historisch" sowie eine Objektidentifikation mitliefern. Die Objektidentifikation ist eindeutig und bleibt bei wiedergefundenen Objekten erhalten. Die "gemessen"-Marke gibt an, daß das Objekt im aktuellen Zyklus gemessen wurde und die "historisch"-Marke signalisiert, daß das Objekt in einem vorangegangenen Zyklus bereits gemessen wurde. Darüber hinaus ist es günstig, daß für jeden kinematischen Meßwert ein Gütemaß zur Verfügung steht.

Die Sensoren 100, 200, 300 senden erfindungsgemäß insbesondere sogenannte Sensorobjekte als Datenobjekte an die Informationsplattform 400. In der Informationsplattform 400 werden ausgehend von den Sensorobjekten sogenannte Fusionsobjekte gebildet. Die Fusionsobjekte entsprechen ebenfalls Datenobjekten, in denen jedoch mehrere Sensorobjekte zusammengefaßt werden können. Zur Synchronisation der Sensordaten wird zunächst festgestellt, ob ein von einem Sensor 100,200, 300 übertragenes Sensorobjekt in einem vorangegangenen Zyklus bereits einem Fusionsobjekt in der Informationsplattform 400 zugeordnet wurde. Dabei ist kein aufwendiges Matching, d.h. Zuordnen, zwischen Fusionsobjekten aus den vorangegangenen Zyklus und aktuellen Sensorobjekten notwendig. Die Zugehörigkeit wird lediglich über die Objektidentifikation des Sensorobjekts in der Liste der in einem Fusionsobjekt befindlichen Sensorobjekte und über die Anwesenheit der "historisch"-Marke des betreffenden. Sensorobjekts überprüft. Wird aufgrund der Identifikation keine Zuordnung gefunden, wird die Sychronisation ohne Bezug zu den Fusionsobjekten durchgeführt und die Position des Objekts berechnet, ausgehend von den Objektinformationen, die bereits für vergangene Zeitpunkte vorliegen, insbesondere mittels der Formeln gemäß Seite 8, 2. Absatz.. Wird eine Zuordnung gefunden, so wird auf Basis des Güte-Wertes und der "gemessen"-Marke zwischen Sensorsdaten und den aus den Fusionsobjekten gebildeten Fusionsdaten entschieden, welche der Größen für die Synchronisation mit welchem Gewicht herangezogen werden. Je höher die Güte, desto höher das Gewicht bei der Berechnung der Synchronisation. Ein Vorteil des erfindungsgemäßen Verfahrens liegt darin, daß die Fusionsdaten, die im zeitlichen Mittel die höhere Qualität aufweisen als die Einzelsensordaten, für die Synchronisation ohne großen algorithmischen Mehraufwand verwendet werden können bzw. höheres Gewicht als die Sensordaten haben.

**Patentansprüche**

1. Verfahren zur Synchronisation von Sensordaten eines Sensorobjekts, welches von wenigstens einem Fahrzeugsensor (100, 200, 300) zu einem sensorspezifischen Messzeitpunkt (110, 210) ermittelt wurde auf eine aus mehreren Basiszeitpunkten bestehende gemeinsame Zeitbasis, wobei die Sensordaten wenigstens eine Größe, die charakteristisch für ein Sensorobjekt ist, darstellen **dadurch gekennzeichnet, daß** ausgehend von diesem Messzeitpunkt und dem Wert dieser Größe zum Messzeitpunkt der Wert dieser Größe zu wenigstens einem der Basiszeitpunkte ermittelt wird.

2. Verfahren nach Anspruch 1, **dadurch gekennzeichnet, daß** der Meßzeitpunkt (110, 210) zeitlich vor oder zeitlich nach dem Basiszeitpunkt ($t_{k-1}$, $t_k$, $t_{k+1}$) liegt.

3. Verfahren nach einem der vorhergehenden Ansprüche, **dadurch gekennzeichnet, daß** die wenigstens eine Größe eine gemessene oder eine berechnete Größe darstellt.

4. Vorrichtung zur Synchronisation von Sensordaten zur Durchführung eines der Verfahren nach einem der vorhergehenden Ansprüche, mit Fahrzeugssensoren (10, 200, 300), die Sensordaten erzeugen und mit einer Informationsplattform (400), die die Sensordaten empfängt.

**Claims**

1. Method for synchronization of sensor data of a sensor object, which has been determined by at least one vehicle sensor (100, 200, 300) at a sensor-specific measurement time (110, 210), to a common timebase, which comprises two or more base times, with the sensor data representing at least one variable which is characteristic of a sensor object, **characterized in that** the value of this variable is determined at at least one of the base times on the basis of this measurement time and the value of this variable at the measurement time.

2. Method according to Claim 1, **characterized in that** the measurement time (110, 210) occurs at a time before or at a time after the base time ($t_{k-1}$, $t_k$, $t_{k+1}$).

3. Method according to one of the preceding claims, **characterized in that** the at least one variable represents a measured or a calculated variable.

4. Method for synchronization of sensor data in order to carry out one of the methods according to one of the preceding claims, having vehicle sensors (10, 200, 300) which produce sensor data, and having an information platform (400) which receives the sensor data.

**Revendications**

1. Procédé pour la synchronisation de données de capteurs d'un objet capteur qui a été déterminé par au moins un capteur de véhicule (100, 200, 300) à un instant spécifique au capteur ( 110, 210) sur une base de temps commune composée de plusieurs instants de base, les données de capteurs représentant au moins une grandeur qui est caractéristique pour un objet de capteur,
   **caractérisé en ce qu'**
   en partant de cet instant de mesure et de la valeur de cette grandeur à l'instant de mesure, la valeur de cette grandeur est déterminée à au moins l'un des instants de base.

2. Procédé selon la revendication 1,
   **caractérisé en ce que**,
   considéré dans le temps, l'instant de mesure (11, 210) est situé avant ou après l'instant de base ($t_{k-1}$, $t_k$, $t_{k+1}$).

3. Procédé selon une des revendications précédentes,
   **caractérisé en ce que**
   l'au moins une grandeur représente une grandeur mesurée ou une grandeur calculée.

4. Dispositif pour la synchronisation de données de capteur pour la mise en oeuvre d'un des procédés selon une des revendications précédentes, comprenant des capteurs de véhicule (10, 200, 300) qui produisent des données de capteurs et une plate-forme d'information (400) qui reçoit les données de capteurs.

Fig. 1

Fig. 2